(19) Europäisches Patentamt
European Patent Office
Office européen des brevets

(11) **EP 4 815 551 A1**

(12) **EUROPEAN PATENT APPLICATION**
published in accordance with Art. 153(4) EPC

(43) Date of publication:
**30.09.2026 Bulletin 2026/40**

(21) Application number: **23959285.0**

(22) Date of filing: **24.11.2023**

(51) International Patent Classification (IPC):
***H04W 28/02*** *(2009.01)*

(52) Cooperative Patent Classification (CPC):
**H04W 28/02**

(86) International application number:
**PCT/CN2023/134121**

(87) International publication number:
**WO 2025/107316 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DU, Zhongda**
**Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD AND COMMUNICATION DEVICE**

(57) The present disclosure provides a method for wireless communication and a communication device. The method includes the following. A first device receives a first message sent by a second device, where the first message is used for triggering the first device having a first variable within a preset range to perform initial access, and the first variable is used for determining whether the first device is able to initiate initial access.

FIRST DEVICE
SECOND DEVICE
S610 FIRST MESSAGE

FIG. 6

EP 4 815 551 A1

## Description

TECHNICAL FIELD

This disclosure relates to the field of communication technology, and specifically to a method for wireless communication and a communication device.

BACKGROUND

In some service scenarios, such as inventory services in an internet of thing (IoT) communication system, a first device needs to initiate initial access to a second device to enable data transmission. If all first devices in the system initiate initial access at approximately the same time, system congestion may occur.

SUMMARY

The present disclosure provides a method for wireless communication and a communication device. The various aspects involved in the present disclosure are described below.

In a first aspect, a method for wireless communication is provided. The method for wireless communication includes the following. A first device receives a first message sent by a second device, where the first message is used for triggering the first device having a first variable within a preset range to perform initial access, and the first variable is used for determining whether the first device is able to initiate initial access.

In a second aspect, a method for wireless communication is provided. The method for wireless communication includes the following. A second device sends a first message to a first device, where the first message is used for triggering the first device having a first variable within a preset range to perform initial access, and the first variable is used for determining whether the first device is able to initiate initial access.

In a third aspect, a communication device is provided, and the communication device is a first device. The communication device includes a receiving unit configured to receive a first message sent by a second device, where the first message is used for triggering the first device having a first variable within a preset range to perform initial access, and the first variable is used for determining whether the first device is able to initiate initial access.

In a fourth aspect, a communication device is provided, and the communication device is a second device. The communication device includes a sending unit configured to send a first message to a first device, where the first message is used for triggering the first device having first variable within a preset range to perform initial access, and the first variable is used for determining whether the first device is able to initiate initial access.

In a fifth aspect, a communication device is provided. The communication device includes a processor, a memory, and a communication interface. The memory is configured to store one or more computer programs, and the processor is configured to invoke the computer program stored in the memory to cause the communication device to perform some or all of the steps in the methods described in the above aspects.

In a sixth aspect, a communication system is provided, and the system includes the aforementioned first device and/or second device. In another possible design, the system may further include another device that can interact with the first device or the second device in the solution provided in the embodiments of the present disclosure.

In a seventh aspect, embodiments of the present disclosure provide a computer-readable storage medium storing a computer program, which is executable by a communication device (for example, a first device or a second device) to perform some or all of the steps in the methods described in the above aspects.

In an eighth aspect, embodiments of the present disclosure provide a computer program product. The computer program product includes a non-transitory computer-readable storage medium storing a computer program, which is executable by a communication device (for example, a first device or a second device) to perform some or all of the steps in the methods described in the above aspects. In some implementations, the computer program product may be a software installation package.

In a ninth aspect, embodiments of the present disclosure provide a chip. The chip includes a memory and a processor. The processor can invoke and execute a computer program from the memory to perform some or all of the steps in the methods described in the above aspects.

In the present disclosure, the second device sends a message for triggering initial access to the first device, so that the first device is able to initiate initial access when a second variable is within a preset range. This allows a limited number of first devices among multiple first devices to perform initial access, thereby preventing first devices from rushing to initiate initial access simultaneously, and thus avoiding system congestion.

BRIEF DESCRIPTION OF THE DRAWINGS

FIG. 1 illustrates a wireless communication system 100 to which the embodiments of the present disclosure are applicable.

FIG. 2 is a schematic diagram of an internet of thing (IoT) communication system to which the embodiments of the present disclosure are applicable.

FIG. 3 illustrates four topological network structures of an IoT communication system.

FIG. 4 is a schematic structural diagram of a radio frequency (RF) receiver.

FIG. 5 is a schematic structural diagram of an intermediate frequency (IF) receiver.

FIG. 6 is a flowchart of a method for wireless communication provided in embodiments of the present disclosure.

FIG. 7 is a schematic diagram illustrating adjustment of a first parameter provided in embodiments of the present disclosure.

FIG. 8 is a schematic block diagram of a communication device provided in embodiments of the present disclosure.

FIG. 9 is a schematic block diagram of another communication device provided in embodiments of the present disclosure.

FIG. 10 is a structural diagram of a communication apparatus provided in embodiments of the present disclosure.

DETAILED DESCRIPTION

The following will describe technical solutions of embodiments of the disclosure with reference to the accompanying drawings.

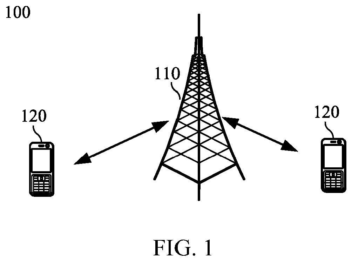

FIG. 1 illustrates a wireless communication system 100 to which the embodiments of the present disclosure are applicable. The wireless communication system 100 may include a network device 110 and a terminal device 120. The network device 110 may be a device that can communicate with the terminal device 120. The network device 110 can provide communication coverage for a specific geographical area and can communicate with the terminal device 120 located within the coverage area.

FIG. 1 exemplarily illustrates one network device and two terminal devices. Optionally, the wireless communication system 100 may include multiple network devices, and within the coverage area of each network device, other numbers of terminal devices may be included. Embodiments of the disclosure are not limited in this regard.

Optionally, the wireless communication system 100 can also include a network controller, a mobile management entity(MME) and other network entities. Embodiments of the disclosure are not limited in this regard.

It may be understood that, technical solutions of embodiments may be applied to various communication systems, for example, a 5th generation (5G) system or a new radio (NR) system, a long term evolution (LTE) system, an LTE frequency division duplex (FDD) system, an LTE time division duplex (TDD) system, etc. Technical solutions provided in the present disclosure can also be applied to a future communication system, such as a 6th generation mobile communication system, satellite communication system, and so on.

The terminal device in the present disclosure may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user device. A terminal device in the embodiments of the present disclosure may be a device that can provide voice and/or data connectivity to users, and may be used for connecting people, objects, and machines, such as a handheld device with wireless connection function, a vehicle-mounted device with wireless connection function, etc. The terminal device in the embodiments of the present disclosure may be a mobile phone, a pad, a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. Optionally, the UE may serve as a base station. For example, the UE may serve as a scheduling entity that can provide a sidelink signal between UEs in vehicle-to-everything (V2X), device-to-device (D2D), etc. For example, a cellular phone and a car communicate with each other using the sidelink signal. A cellular phone can communicate with a smart home device without relaying a communication signal through a base station.

A network device in the embodiments of the present disclosure may be a device that can communicate with a terminal device, and the network device may also be referred to as an access network device or a radio access network device. For example, the network device may be a base station. The network device in the embodiments of the present disclosure may refer to a radio access network (RAN) node (or device) that can access a terminal device to a wireless network. A base station may generally cover various names as follows or be replaced with the following names, such as NodeB, evolved NodeB (eNB), next generation NodeB (gNB), relay station, transmitting and receiving point (TRP),

transmitting point (TP), master eNB (MeNB), secondary eNB (SeNB), multi-standard radio (MSR) node, home base station, network controller, access node, wireless node, access point (AP), transmission node, transceiving node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, a modem, or a chip disposed in the aforementioned devices or apparatuses. The base station may also be a mobile switching center, a device undertaking a base station function in D2D, V2X, and machine-to-machine (M2M) communication, a network-side device in a 6G network, a device undertaking the base station function in a future communication system, etc. The base station may support networks of the same or different access technologies. The specific technology and specific device form adopted by the network device are not limited in the embodiments of the present disclosure.

The base station may be fixed or mobile. For example, a helicopter or an unmanned aerial vehicle may be configured to serve as a mobile base station, and one or more cells may move according to the position of the mobile base station. In another example, a helicopter or an unmanned aerial vehicle may be configured to serve as a device that can communicate with another base station.

In some deployments, the network device in the embodiments of the present disclosure may refer to a CU or a DU, or the network device may include a CU and a DU. The gNB may also include an AAU.

The network device and the terminal device may be deployed on land, including indoor or outdoor, handheld or vehicle-mounted. The network device and the terminal device may also be deployed on water surface, and may further be deployed on an aircraft, a balloon, or a satellite. The scenario in which the network device and the terminal device is deployed is not limited in the embodiments of the present disclosure.

It may be understood that, all or part of the functions of the communication device in the present disclosure may also be implemented through software functions running on hardware, or through virtualized functions instantiated on a platform (such as a cloud platform).

Internet of thing (IoT) technology

The rise of IoT technology poses new challenges to communication systems. Application scenarios of an IoT terminal device may include logistics, warehousing, factory automation, animal husbandry, etc. An intermittent simple communication or rough positioning and tracking can be performed between an IoT terminal device and an IoT network device. Even for the simplest IoT terminal device, such as an NB-IoT terminal device used for coal meter metering and electricity meter metering, a battery is required to provide energy. However, although the IoT terminal devices have extremely low power consumption, the batteries inside the IoT terminal devices can only last for several years at most and will eventually be depleted. Therefore, the battery of the IoT terminal device needs to be replaced regularly, which may consume a significant amount of labor. Moreover, some industrial scenarios may involve safety risks and are not suitable for manual operation. Therefore, battery-free IoT terminal devices have emerged as the times require.

Battery-free IoT terminal devices are large in quantity and low in cost, and generally do not require manual maintenance after installation. Radio frequency identification (RFID) terminal devices can satisfy people's demand for battery-free IoT terminal devices to a certain extent. However, the operation of an RFID system still requires manual involvement. For example, in some RFID systems, it is necessary to manually hold a reader. Moreover, the wireless coverage range of a single RFID reader is limited (within 10 meters), so the deployment of the RFID system over a large area requires significant manual involvement. For example, when an RFID system is used to inventory goods in a large supermarket, substantial manpower, material resources, and time are required.

IoT communication system

Migrating a system similar to RFID into a cellular network can effectively solve the problem of limited coverage. This is because the cellular network (such as a 4th generation (4G) system and a 5G system) has achieved full nationwide coverage or at least coverage of major cities in some countries or regions (such as China, Europe, and the United States). Based on the relatively wide network coverage range, the communication or positioning process between the IoT terminal device and the network device may not require manual involvement. Therefore, the IoT terminal device can operate continuously with high efficiency. In addition, the IoT terminal device can even operate efficiently in environments unsuitable for human presence (such as wilderness areas, mining sites, factories). Therefore, when applying the IoT terminal device, in addition to initial association between the IoT terminal device and a specific object, subsequent data reading, writing, and operation and maintenance can be performed through an application (APP) on a smartphone, which is extremely convenient and efficient. Such a communication system may be referred to as an IoT communication system (or A-IoT communication system) or a zero-power communication system.

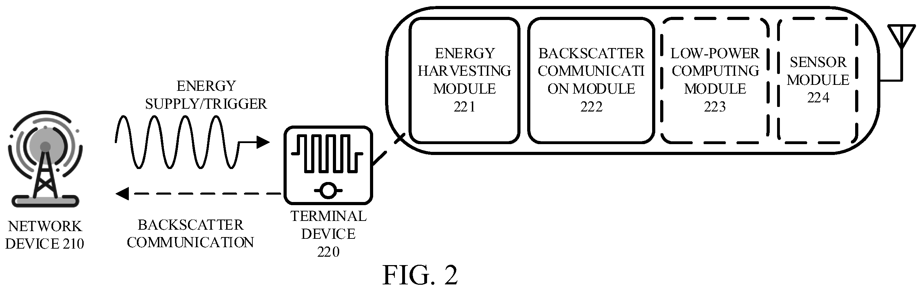

As illustrated in FIG. 2, an IoT communication system may include a network device 210 and a terminal device 220. The terminal device 220 may be a zero-power terminal device. The network device 210 may be referred to as a reader,

and the terminal device 220 may be referred to as a tag. The IoT communication system adopts energy harvesting and backscatter communication technologies. The network device 210 can send a wireless power (energy) supply signal and a downlink communication signal to the terminal device 220, and receive a backscatter signal from the terminal device 220. A basic terminal device 220 may include an energy harvesting module 221, a backscatter communication module 222, and a low-power computing module 223. In addition, the terminal device 220 may further include a memory module (not illustrated in the figure) for storing some basic information (such as item identification, etc.). Alternatively, the terminal device 220 may include a sensor module 224 for obtaining sensing data such as ambient temperature and ambient humidity.

Use cases of the IoT communication system may include four major categories, namely inventory, sensor, tracking, and command. Inventory refers to checking for missing or additional goods when goods enter or leave a warehouse. Common sensors may include temperature sensors, pressure sensors, humidity sensors, and other sensors. Sensors can be used in scenarios such as industry, agriculture, and smart cities. The information collected by sensors can be uploaded to a third-party App for monitoring and management through the IoT system. Tracking generally refers to irregularly obtaining the approximate location of an object. For example, users can real-time get the location of their own express delivery through a smartphone. Command refers to operating a certain servomechanism through the IoT system. The servomechanism can be connected to the IoT terminal device. For example, people can water flowers and plants in the backyard through an App in a mobile phone while working or resting in the office, where the water sprinkling servomechanism can be connected to a certain IoT terminal device.

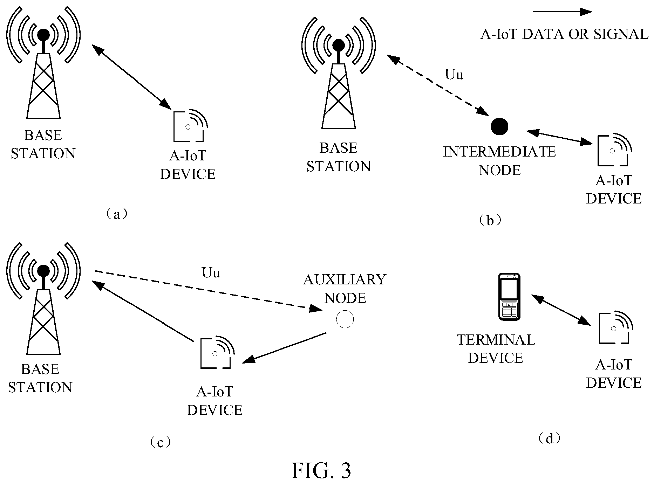

The network structure of the IoT communication system may be as illustrated in FIG. 3, which includes four topological network structures. In FIG. 3(a), the IoT terminal device may directly perform uplink communication and downlink communication with a base station. In FIG. 3(b), the IoT terminal device may perform uplink communication and downlink communication with the base station through an intermediate node. The IoT terminal device may perform two-way communication with the intermediate node, and the intermediate node may perform Uu communication with the base station. In FIG. 3(c), the IoT terminal device may perform uplink communication with the base station, and the base station may perform downlink communication with the IoT device through an auxiliary node. In FIG. 3(d), the IoT terminal device may perform uplink communication and downlink communication with other terminal devices.

Energy of the IoT terminal device may come from the surrounding environment, such as radio frequency (RF) signals, solar energy, thermal energy, mechanical vibration, wind energy, etc. IoT terminal devices can be classified into three types, namely type *A,* type *B,* and type C. Among the three types, terminal devices of type *A* and type *B* can only communicate by reflecting and modulating received RF signals, where such a communication manner is called backscattering. That is to say, terminal devices of type *A* and type *B* cannot actively send a radio signal, and transmission power of the terminal devices of type *A* and type *B* is in the range of 1~10 microwatts (μW). The terminal devices of type A have the lowest transmission power and the lowest hardware complexity, and are substantially comparable to the RFID terminal devices. The terminal devices of type B have slightly higher hardware complexity, and may include a signal amplifier and a certain energy storage device, so the communication distance between the terminal device of type B and the network device is greater than the communication distance between the terminal device of type A and the network device. The terminal devices of type C have the ability to actively send RF signals. The terminal devices of type C have transmission power which are approximately in the range of 1~10 milliwatts (mW), and can store a certain amount of energy. The three types of terminal devices can all harvest energy from the environment and may operate continuously for several years or more than 10 years. In addition, for energy saving, the terminal devices of type *A* and type *B* remain substantially in a dormant state before the network device triggers the communication process with the terminal devices of type *A* and type *B.* Only after being activated by wireless signals from the network device do the terminal devices of type *A* and type *B* begin to operate.

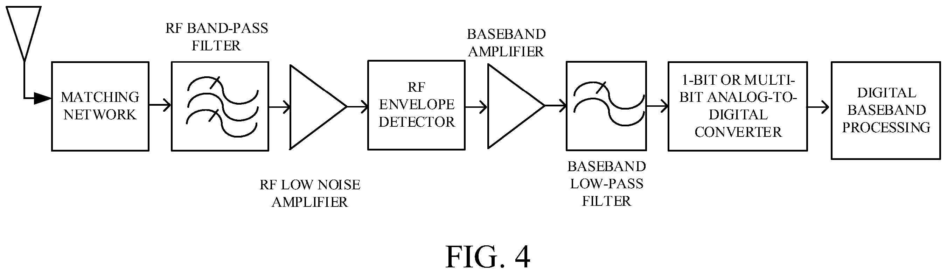

Receivers of IoT terminal devices may include two major types, namely type 1 and type 2. Receivers of type 1 are wideband receivers, which are also called RF receivers. The RF receiver can obtain, based on a radio frequency band-pass filter, signals within the bandwidth range which the RF receiver intend to receive, and then the RF receiver can perform envelope detection and subsequent baseband processing. The RF receiver has the simplest structure, and the power consumption of the RF receiver can be as low as a few μW or even lower. However, since the radio frequency band-pass filter has relatively poor precision, even in a case where the target signal occupies a relatively narrow bandwidth, the RF receiver is prone to receive signals within a relatively wide bandwidth. Therefore, a significant amount of noise and interference are introduced during the receiving process of the RF receiver, which may cause relatively poor receiving performance or receiving sensitivity of the RF receiver. The typical receiving process of an RF receiver may be as illustrated in FIG. 4.

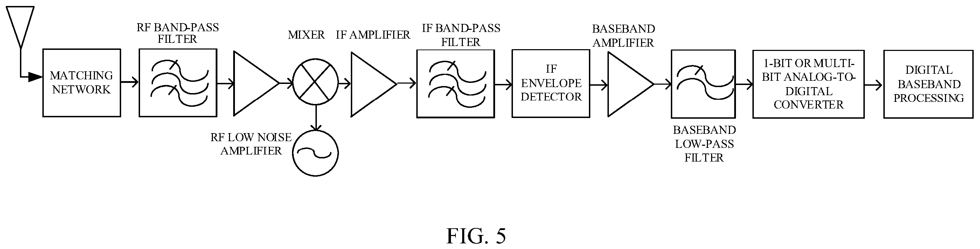

Receivers of type 2 are narrowband receivers, and the narrowband receivers may be, for example, intermediate frequency (IF) receivers or zero-IF receivers. In the signal receiving process, in addition to using a radio frequency band-pass filter to obtain a signal within a bandwidth range which the narrowband receiver intends to receive, the narrowband receiver can further perform down-conversion on RF signals, and further perform filtering on a baseband signal using a low-pass filter to filter out noise and interference. Therefore, the narrowband receiver has a narrow receiving bandwidth,

good receiving performance, and high receiving sensitivity. However, the narrowband receiver needs to use a local oscillator (LO). The LO has relatively high power consumption, and even a recommended LO consumes about 100μW or even more. Therefore, the power consumption of the narrowband receiver is relatively higher. However, the narrowband receiver is still suitable for zero-power devices since the absolute power consumption of the narrowband receiver is relatively low. The typical receiving process of an IF receiver may be as illustrated in FIG. 5.

The aforementioned terminal devices of type A usually adopt the wideband receiver. The terminal devices of type C usually adopt the narrowband receiver. The terminal devices of type B may adopt either or both types of the receivers.

In addition, in the IoT communication system, the tag density requirements are 150/100m$^2$ for indoors and 0.20/100m$^2$ for outdoors. The indoor network coverage range is 10~50m, and the outdoor network coverage range is 50~500m. Based on this, within the coverage range of a cell (calculated according to a classic sector), the minimum and maximum numbers of indoor tags and outdoor tags may be as illustrated in Table 1.

Table 1

| Scenario | Minimum number | Maximum number |
|---|---|---|
| Indoor | 157 | 3926 |
| Outdoor | 523 | 52360 |

Inventory service

The most commonly used service type in the IoT communication system is the inventory service. In the inventory service, a reader requires all tags satisfying a condition within the coverage area of the reader to report information stored in the memory of each tag, such as the electronic product code (EPC) of each tag. Usually, the reader can send an inventory request to the tag to make the tag trigger initial access, so as to report information. However, if all tags satisfying a condition respond to the inventory request from the reader simultaneously, the system will fail to operate. This is because, for a narrowband system such as the IoT system, wireless resources in domains such as time domain and frequency domain are extremely limited compared with the number of tags within the coverage area. Therefore, it is necessary to control the system such that only a portion of tags can trigger initial access. However, there is currently no relevant solution for the IoT system that can enable only a portion of tags to trigger initial access at present.

A similar problem also exists in the RFID system, and the execution process of the inventory service in the RFID system is illustrated below. When triggering the inventory service, a reader may first send a select command to the tag. The reader may select a portion of tags satisfying a condition through the select command and set an inventory flag for each selected tag, where the value of the inventory flag may be *A* or *B.* In addition, the reader may divide the tags into 4 groups, and the inventory flag of each tag in each group can be independently controlled. In a subsequent query message, the reader may indicate which group of tags is to be inventoried, and whether the value of the inventory flag of each tag to be inventoried is *A* or *B.* The same query message may further carry parameter *Q*. Upon receiving the query message, the tag satisfying a condition can generate a random number, where the range of the random number may be [0, 2^Q-1]. Only the tag having the random number equal to 0 initiates initial access. Each of other tags may assign the random number to a counter of the tag, and decrement the values of the counter by 1 each time the tag receive a query message requesting tags of the same group to perform inventory. A corresponding tag initiates initial access only when the value of the counter is equal to 0.

As an example, the content of the above query command may be as illustrated in Table 2.

Table 2

| Command / Content | command | DR | M | TRext | Sel | Session | Target | Q | CRC |
|---|---|---|---|---|---|---|---|---|---|
| Number of bits | 4 | 1 | 2 | 1 | 2 | 2 | 1 | 4 | 5 |
| Description | 1000 | 0:DR =81 1:DR =64/3 | 00: M=1 01: M=2 10: M=4 11: M=8 | 0: no pilot tone 1: use pilot signal | 00:All 01:All 10:~SL 11:SL | 00:S0 01:S1 10:S2 11:S3 | 0:A 1:B | 0-15 | CRC -5 |

The above method cannot be effectively applied to the IoT system. The main reason is that the coverage range of a reader in the IoT system (e.g., 10m) is much larger than the coverage range of a reader in the RFID system (e.g., 500m). Therefore, even under a premise of the same tag density, the number of tags that can be served by a reader in the IoT system is about 2500 times the number of tags that can be served by a reader in the RFID system. Based on the above reason, the IoT system cannot perform serial processing like the RFID system, but needs to perform parallel processing. That is, both the initial access process and the subsequent scheduling process need to be processed through some specific multiple access technologies to implement parallel processing. For the initial access process, more than one tag is required to perform initial access. In addition, compared with tags of type *A* and type *B,* tags of type *C* can generate a non-integer random number, while the RFID system is not designed to support such capability of the tags of type *C*. Tags of type *A* is substantially comparable to the tags in the RFID system in terms of hardware capability.

In a broadband system of 3GPP, the basic idea of congestion control is that a subscriber identity module (SIM) card in each terminal device has an access identity. Except for some special access identities, most access identities may cause the terminal device to generate random number *rand* when the terminal device initiates a mobile-originated service, where the range of the random number is [0,1). If *rand* is less than a threshold uac-BarringFactor configured through system information, the terminal device may initiate initial access. Otherwise, the terminal device needs to wait for a certain period of time before retrying. The waiting time of the terminal device is directly related to random number *rand,* and is calculated according to the calculation formula:

$$\text{“Tbarring”} = (0.7 + 0.6 * \text{rand}) * \text{uac-BarringTime}$$

where *"Tbarring"* represents required waiting time, and *uac-BarringTime* represents a parameter configured through system information.

The above method has the following three characteristics:

1. The random number generated by the terminal device is a fractional random number between 0 and 1.
2. The retry time is uniformly distributed in the time domain by using the random number and the parameter *uac-BarringTime,* and the minimum time interval for retry is 0.7* uac-BarringTime.
3. A fractional random number between 0 and 1 needs to be generated for each retry.

The above method is too complicated for a tag with extremely simplified hardware. Compared with an integer random number, generation of a fractional random number is more complicated. In other words, the cost of generating a fractional random number is higher. Especially for devices of type *A* and type *B,* the cost of generating a fractional random number is higher. For devices of type *C*, generating a fractional random number may be supported, but a fractional random number needs to be generated again for each call attempt, which also incurs a relatively high cost. In addition, in terms of service type, access control of the broadband system is mainly applied to mobile-originated services, that is, initial access can only be triggered when the terminal device actively initiates a call service. However, in the IoT system, in addition to devices of type *C*, other devices cannot support mobile-originated services. That is, other devices cannot actively send a message, and can only be triggered after the network device sends a message. Therefore, the initial access solution in the broadband system is also not applicable to the IoT system.

It can be seen from the above illustration that, there is currently no method for initial access applicable to devices in the IoT system.

Based on this, in the present disclosure, a second device can send a message for triggering initial access to a first device, so that the first device is able to initiate initial access when the second variable is within a preset range. This allows a limited number of first devices among multiple first devices to perform initial access, and prevents first devices from rushing to initiate initial access simultaneously, and thus avoiding system congestion.

The first device in the embodiments of the present disclosure may be a terminal device. For example, the first device may be a tag. The second device may be a terminal device and/or a network device. For example, the second device may be a reader.

The solution of the embodiments of the present disclosure may be applied to an IoT communication system. For example, the first device and the second device may be devices in the IoT communication system.

The solution of the embodiments of the present disclosure may be applied to any one of the service scenarios described above. For example, the solution of the embodiments of the present disclosure may be applied to one or more of the following service scenarios: inventory, sensor, tracking and command.

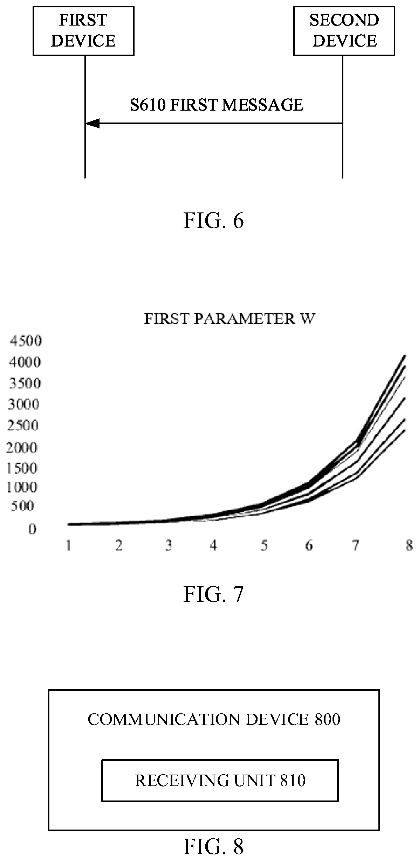

The solution of the embodiments of the present disclosure will be illustrated in detail below with reference to FIG. 6.

With reference to FIG. 6, in step S610, a second device sends a first message to a first device. The first message may be used for triggering the first device to perform initial access. In some embodiments, the first message may be any message for communication between a tag and a reader. For example, the first message may be a query message, or the first message may be a select message.

In the solution of the embodiments of the present disclosure, the second device actively sends a message to trigger the first device to initiate initial access, thereby reducing the performance requirement on the first device, and making the solution of the embodiments applicable to any type of device. For example, the solution is applicable to devices of type *A* and devices of type *B* that cannot actively send a signal as described above, and devices of type *C* that can actively send a signal.

In some embodiments, the first message may be used for triggering the first device having a first variable within a preset range to perform initial access. The first device may include the first variable, and the first variable can be used for determining whether the first device is able to initiate initial access. Upon receiving the first message, the first device may determine whether to perform initial access according to a value of the first variable. If the value of the first variable is within the preset range, the first device initiates initial access. If the value of the first variable is not within the preset range, the first device refrains from initiating initial access. If the value of the first variable is not within the preset range, the first device may continue to monitoring the first message sent by the second device. The preset range may be used for limiting the number of devices that initiate initial access, so as to prevent an excessive number of first devices from performing initial access simultaneously, and accordingly avoiding system congestion.

In some embodiments, the first variable may be a counter (*RN-COUNTER*) or a random percentage (*rp*). If a random number described below is an integer, the first variable may be the counter *RN-COUNTER.* If the random number described below is a non-integer, the first variable may be the random percentage *rp.* The scheme in which the random number is an integer is applicable to devices of any type and therefore has general applicability. For devices of type *C*, each device can generate a fractional random number, so the scheme in which the random number is a non-integer are applicable to the devices of type *C*.

In some embodiments, the first variable may be maintained by the first device itself. The first device may adjust the value of the first variable according to different scenarios, which will be described in detail below.

In some embodiments, the second device may send multiple first messages to the first device. The first device may determine an update manner of the first variable according to whether the first message is received for the first time. It may be noted that, in the embodiments of the present disclosure, updating the first variable may be understood as updating the value of the first variable.

For example, if the first message is received by the first device for the first time, the first device may generate a first random number, and update the value of the first variable to the first random number. That is, if the first message is received by the first device for the first time, the first device may assign the value of the first random number to the first variable.

The first random number may be an integer or a non-integer (i.e., a fractional value). If the first random number is a non-integer, the first random number may be a non-integer greater than or equal to 0 and less than 1. For example, if the first random number is a non-integer, the first device may generate the first random number within [0,1). In this case, the maximum value of the first random number and/or minimum value of the first random number may be a default value.

If the first random number is an integer, the range of the first random number may be determined based on a third parameter. The third parameter may be a predefined parameter, or a parameter sent by the second device to the first device. In some embodiments, the third parameter may be carried in the first message. In some embodiments, the first device may determine the maximum value of the first random number and/or minimum value of the first random number based on the third parameter.

In some embodiments, the maximum value of the first random number is determined based on the third parameter, and the minimum value of the first random number is a preset value. For example, the preset number may be 0.

In some embodiments, the minimum value of the first random number is determined based on the third parameter, and the maximum value of the first random number is a preset value.

In some embodiments, both the maximum value of the first random number and the minimum value of the first random number are determined based on the third parameter.

In some implementations, the maximum value of the first random number and/or minimum value of the first random number is determined based on an exponential power of the third parameter. For example, the maximum value of the first random number and/or minimum value of the first random number may be determined based on 2 raised to a power of the third parameter. By determining the maximum value of the first random number of the first random number and/or minimum value of the first random number through an exponential operation, the number of bits required for transmitting the third parameter can be significantly reduced, thereby reducing communication overhead.

For example, in a case where the maximum value of the first random number is determined based on the third parameter, assuming that the third parameter is denoted as $Q$, the range of the first random number may be [0, 2^$Q$-1]. The first device may generate the first random number within [0, 2^$Q$-1].

There are multiple manners for determining whether the first message is received by the first device for the first time. In some embodiments, if the first device satisfies a first condition, the first message is received by the first device for the first time. The first condition includes one or more of the following: the value of the first variable is an initial value, or a state machine in the first device is in an initial state.

For example, the first variable may have an initial value, which may be outside the range of the first random number, or may fall within the range of the first random number with an extremely low probability. If the value of the first variable is the initial value, the first device may determine that the first message is received for the first time. The first variable being the initial value means that the first variable has been reset. For example, if the maximum value of the third parameter specified in the protocol is *MQ,* the initial value of the first variable may be 2^*MQ - 1.*

As another example, a state machine may be arranged inside the first device, and if the state machine is in the initial state, the first device may determine that the first message is received for the first time. As a further example, the first device may determine that the first message is received for the first time in a case where the value of the first variable is the initial value and the state machine is in the initial state.

In some embodiments, when the first device receives the first message for the first time, the first device may update the value of the first parameter and/or change the state of the state machine. For example, the first device may update the value of the first parameter from the initial value to another value. As another example, the first device may change the state of the state machine from the initial state to another state.

In some embodiments, if the first message is not received by the first device for the first time, the first device may update the first variable by using the first parameter. In some embodiments, if the first message is not received for the first time by the first device and the first variable is not within the preset range, the first device may update the first variable using the first parameter. In some embodiments, if the value of the first parameter is not the initial value and/or the state machine of the first device is not in the initial state, the first device may determine that the first message is not received for the first time.

In some embodiments, the first device does not need to determine whether the first message is received for the first time, and may directly update the first variable according to the value of the first variable and/or the state of the state machine in the first device upon receiving the first message. For example, if the value of the first variable is the initial value and/or the state machine in the first device is in the initial state, the first device generates the first random number. The first device may update the current value of the first variable to the first random number. As another example, if the value of the first variable is not the initial value and/or the state machine in the first device is not in the initial state, the first device may update the first variable using the first parameter.

It may be noted that, the current value of the first variable may be understood as the value of the first variable before this update.

The first parameter may be a predefined parameter, or the first parameter is a parameter sent by the second device to the first device. In some embodiments, the first parameter may be carried in the first message. For example, the second device may send the first message to the first device, and the first message includes the first parameter.

There are multiple manners for the first device to update the first variable using the first parameter, which are not specifically limited in the embodiments of the present disclosure. In some embodiments, the first device may perform some operations on the current value of the first variable and the first parameter to obtain an updated first variable. The aforementioned operations may be one or more mathematical operations, which may include one or more of the following: addition, subtraction, multiplication, division, and the like.

As an example of subtraction, the updated value of the first variable may be determined based on a difference between the current value of the first variable and the first parameter. For example, the updated value of the first variable

may be equal to the difference between the current value of the first variable and the first parameter. For example, assuming that the first variable is denoted as *rp,* the first parameter is denoted as *w*, and the updated first variable is denoted as *rp',* then *rp*'=|*rp*-*w*|, where *rp* is greater than or equal to *w*. By updating the first variable through a subtraction operation, the performance requirement on the first device is relatively low, so that the solution is applicable to various types of first devices. In addition, by means of the subtraction operation, the number of first devices that perform initial access each time may be controlled, thereby preventing an excessive number of first devices from performing initial access simultaneously, and accordingly avoiding system congestion. Secondly, since the first parameter w is used for determining the preset range, by means of the above operation, the devices can perform initial access in a queue manner, which facilitates the management of the devices. In addition, when the third parameter remains substantially unchanged, the ratio of the number of first devices that attempt initial access to the total number of devices varies according to the same rule as the first parameter.

In the solution of the embodiments of the present disclosure, since there is no need to generate a random number each time the first message is received, the performance requirement on the device may be reduced, thereby reducing the cost of initial access.

In some embodiments, the preset range may be determined based on the first parameter. The first parameter may be a predefined parameter, or the first parameter may be a parameter sent by the second device to the first device. In some embodiments, the first parameter may be carried in the first message. In some embodiments, the first parameter may be used for determining the maximum value of the preset range and/or minimum value of the preset range. Certainly, in some embodiments, the preset range may also be a default range.

In some embodiments, the minimum value of the preset range may be a preset value, and the maximum value of the preset range may be determined based on the first parameter. The preset value may be 0, that is, the minimum value of the preset range may be 0. In some embodiments, the maximum value of the preset range may be the value of the first parameter, that is, the second device may directly indicate the maximum value of the preset range to the first device. This indication manner is simple, has a low requirement on the computing capability of the first device, and is applicable to various types of first devices. In other embodiments, the maximum value of the preset range may also be obtained through performing certain operations on the first parameter. That is, the second device may send the first parameter to the first device, and the first device calculates the maximum value of the preset range based on the first parameter.

For example, in a case where the first parameter directly indicates the maximum value of the preset range, the preset range may be [0, *w*), where *w* denotes the first parameter.

In other embodiments, the maximum value of the preset range may be a preset value, and the minimum value of the preset range may be determined based on the first parameter. For example, the preset value may be the maximum value of the first random number, that is, the maximum value of the preset range is the maximum value of the first random number. In some embodiments, the minimum value of the preset range may be the value of the first parameter, that is, the second device may directly indicate the minimum value of the preset range to the first device. This indication manner is simple, has a low requirement on the computing capability of the first device, and is applicable to various types of first devices. In other embodiments, the minimum value of the preset range may also be obtained through performing certain operations performed on the first parameter. That is, the second device may send the first parameter to the first device, and the first device calculates the minimum value of the preset range based on the first parameter.

For example, in a case where the first parameter directly indicates the minimum value of the preset range, the preset range may be [*w*, *m*), where *w* denotes the first parameter and *m* denotes the maximum value of the first random number.

In some other embodiments, both the maximum value of the preset range and the minimum value of the preset range are determined based on the first parameter. In some possible implementations, the value of the first parameter may include the minimum value of the preset range and the maximum value of the preset range. That is, the second device may directly indicate the minimum value of the preset range and the maximum value of the preset range to the first device. This indication manner is simple, has a low requirement on the computing capability of the first device, and is applicable to various types of first devices. In still other possible embodiments, the minimum value of the preset range and the maximum value of the preset range may also be obtained through performing certain operations on the first parameter. That is, the second device may send the first parameter to the first device, and the first device calculates the minimum value and the maximum value of the preset range based on the first parameter.

After the first device initiates initial access, the initial access may succeed or fail. A successful initial access may also be referred to as completed initial access. The two cases are described separately below.

If the initial access performed by the first device succeeds, the first device may set the value of the first variable to the initial value, that is, reset the first variable, and/or the first device may set the state machine to the initial state. Additionally, the first device may stop monitoring the first message until the whole call process ends.

If the initial access performed by the first device fails, the first device may readjust the value of the first variable and resume monitoring the first message, so as to regain an opportunity to perform initial access. There are multiple manners for the first device to update the first variable, which are not specifically limited in the embodiments of the present

disclosure. For example, the first device may update the current value of the first variable to a value close to a boundary value of the first random number, where the boundary value may include a maximum value and/or a minimum value. As another example, the first device may regenerate a second random number and update the current value of the first variable to the second random number. Details are described below.

In some embodiments, the first device may update the current value of the first variable to a value close to the maximum value of the first random number. For example, the updated value of the first variable may be determined based on a difference between the maximum value of the first random number and the current value of the first variable. For example, in a case where the first random number is an integer, the updated first variable is equal to $2^Q-1-RN\text{-}COUNTER$, where $2^Q-1$ is the maximum value of the first random number and $RN\text{-}COUNTER$ is the current value of the first variable. For another example, in a case where the first random number is a fractional value, the updated first variable is equal to $1-rn$, where $rn$ is the current value of the first variable.

In some embodiments, if initial access performed by the first device fails, the first device may generate the second random number and update the current value of the first variable to the second random number.

The range of the second random number is not specifically limited in the embodiments of the present disclosure. In some embodiments, the range of the second random number is the same as the range of the first random number. In other embodiments, the range of the second random number is different from the range of the first random number. For example, the range of the second random number is narrower than the range of the first random number, that is, the range of the second random number falls within the range of the first random number.

In some embodiments, the range of the second random number may be determined based on a second parameter. The second parameter may be a predefined parameter, or the second parameter may be a parameter sent by the second device to the first device. For example, the second device may send the second parameter to the first device, the first device determines the range of the second random number based on the second parameter, and the first device may generate the second random number within the range of the second random number. In some implementations, the second parameter is carried in the first message and/or the second parameter is carried in a message used in initial access. For example, the first device may obtain the second parameter during initial access.

In some implementations, the second device may determine the range of the second random number according to the number of devices that have completed initial access, and send a corresponding second parameter to the first device. In this way, the first device can complete initial access as soon as possible, while avoiding adversely affecting initial access performed by other devices.

In some embodiments, the maximum value of the second random number and/or the minimum value of the second random number may be determined based on the second parameter. In some possible implementations, the second parameter may include the maximum value of the second random number and/or the minimum value of the second random number. This manner is simple, has a low requirement on the computing capability of the first device, and is applicable to various types of first devices. In some possible implementations, the maximum value of the second random number and/or the minimum value of the second random number may be obtained through performing operations on the second parameter. For example, the maximum value of the second random number and/or the minimum value of the second random number may be determined based on an exponential power of the second parameter. The exponential power may be an exponential power with base 2. This manner helps reduce the number of bits required for transmitting the first parameter, thereby reducing communication overhead.

It can be seen from the above illustration that, the random number generated by the first device may be an integer or a non-integer. The range of the second random number is described below for these two cases.

In some embodiments, if the second random number is an integer, the maximum value of the second random number and/or the minimum value of the second random number may be determined based on the exponential power of the second parameter. The maximum value of the second random number and/or the minimum value of the second random number is obtained through exponential operation, which can significantly reduce the number of bits required for transmitting the second parameter and thus lower communication overhead.

In some embodiments, the minimum value of the second random number is determined based on the second parameter, and the maximum value of the second random number is determined based on the maximum value of the first random number. For example, the maximum value of the second random number is the maximum value of the first random number.

In some other embodiments, the maximum value of the second random number is determined based on the second parameter, and the minimum value of the second random number is a preset value. For example, the preset value may be 0.

In some other embodiments, both the maximum value of the second random number and the minimum value of the second random number are determined based on the second parameter.

In some possible implementations, the maximum value of the second random number and/or the minimum value of the second random number may be determined based on the exponential power with base 2 of the second parameter. Assuming that the second parameter is as $n$, the maximum value of the second random number and/or the minimum value

of the second random number may be determined based on $2^n$. For example, the maximum value of the second random number and/or the minimum value of the second random number may be $2^n-1$. Examples are given below for illustration.

For example, if the second parameter includes $S$ and $S<Q$, the range of the second random number may be $[2^S-1, 2^Q-1]$, where $Q$ represents a third parameter and $2^Q-1$ represents the maximum value of the first random number. The first device may generate the second random number within $[2^S-1, 2^Q-1]$.

As another example, if the second parameter includes $T$ and $T<Q$, the range of the second random number may include $[0, 2^T-1]$ or $[W, 2^T-1]$, where $W$ represents the maximum value of the preset range. The first device may generate the second random number within $[0, 2^T-1]$, or the first device may generate the second random number within $[W, 2^T-1]$.

As another example, if the second parameter includes $S$ and $T$, the range of the second random number may be $[2^S-1, 2^T-1]$. The first device may generate the second random number within $[2^S-1, 2^T-1]$.

In some embodiments, if the second random number is a non-integer, for example, the second random number is a non-integer greater than or equal to 0 and less than 1, the value of the second parameter may include the maximum value of the second random number and/or the minimum value of the second random number. For example, the second device may directly indicate the maximum value of the second random number and/or the minimum value of the second random number to the first device.

In some embodiments, the minimum value of the second random number is determined based on the second parameter, and the maximum value of the second random number is determined based on the maximum value of the first random number. For example, if the second parameter includes s and $s<1$, the range of the second random number is $[s, 1)$, and the first device may generate the second random number within [s, 1).

In some embodiments, the maximum value of the second random number is determined based on the second parameter, and the minimum value of the second random number is determined based on the minimum value of the first random number. For example, the minimum value of the second random number may be 0. For example, the second parameter includes $t$ and $t<1$, and the range of the second random number may include $[0, t)$ or $[w, t)$, where w is the maximum value of the preset range. The first device may generate the second random number within $[0, t)$, or the first device may generate the second random number within $[w, t)$.

In some embodiments, both the maximum value of the second random number and the minimum value of the second random number are determined based on the second parameter. For example, if the second parameter includes $s$ and $t$, the range of the second random number may be $[s, t]$, and the first device may generate the second random number within $[s, t]$.

In some embodiments, the value of the first parameter may be variable. Since the first parameter is used for determining the preset range, the number of devices that initiate initial access can be adjusted by adjusting the value of the first parameter, so that the number of devices that initiate initial access reaches an appropriate value. Especially in a case where the number of devices within the coverage area is unknown, an appropriate first parameter and an appropriate third parameter can be obtained through a trial manner, so that the number of devices that initiate initial access reaches an appropriate value. Therefore, the first parameter sent by the second device to the first device may be variable, a window value corresponding to the first parameter may undergo a trial process, and the first parameter may remain substantially unchanged when a relatively optimal solution is found. The length of the third parameter is controlled by the network and mainly depends on the application scenario. Generally, the third parameter does not need to be adjusted.

In some possible embodiments, the value of the first parameter varies according to a first rule, where the first rule includes the following: the value of the first parameter varies first according to a first granularity and then varies according to a second granularity, where the first granularity is greater than the second granularity. In some embodiments, the first parameter may be adjusted by the second device. The second device may first adjust the first parameter according to the first granularity, and then adjust the first parameter according to the second granularity when the first parameter reaches an appropriate value. The first granularity may be coarse-grained, and the second granularity may be fine-grained. By first performing coarse-grained adjustment on the first parameter and then performing fine-grained adjustment on the first parameter, an appropriate value of the first parameter can be obtained quickly, thereby improving adjustment efficiency.

The first granularity may be fixed or variable. In some embodiments, the first granularity may be gradually increased or gradually decreased. The first granularity may vary in an exponential form. By adjusting the first parameter according to the first granularity that varies in the exponential form, the first parameter can be rapidly adjusted to an appropriate value. Details are described below in conjunction with specific embodiments.

The second granularity may be fixed or variable. In some embodiments, the second granularity may be gradually increased or gradually decreased. The second granularity may vary in a linear form. By performing fine granularity adjustment on the first parameter according to the second granularity that varies in a linear form, the first parameter can be rapidly adjusted to an appropriate value.

For example, in a case where the first parameter is used for indicating the maximum value of the preset range, the adjustment process of the first parameter is described below with reference to Table 3 and FIG. 7. Table 3 and Table 4 are illustrated by taking an example where the first parameter is used for determining the maximum value of a random number. The present disclosure is not limited thereto.

Some possible values of the first parameter are illustrated in Table 3 and Table 4. Table 3 corresponds to a case in which the random number is an integer, and Table 4 corresponds to a case in which the random number is a non-integer, for example, a fractional value within [0, 1). For example, as illustrated in Table 3, the maximum value of the preset range may be a value between 18 and 4096. The values in Table 3 are merely an example, and the maximum value of the preset range may also be another value. It may be noted that, the maximum value of the first random number may be a value greater than 4096. Table 4 may be obtained by transforming Table 3. Assuming that the maximum value of the first random number is 2^16, Table 4 may be obtained by dividing all values in Table 3 by 2^16.

FIG. 7 illustrates an adjustment curve generated based on Table 3. The 8 rows of data in Table 3 are used for generating 8 curves in FIG. 7 respectively.

The adjustment process of the horizontal coordinate is coarse-grained adjustment, and the adjustment process of the vertical coordinate is fine-grained adjustment. That is, the variation granularity of the value of the horizontal coordinate is greater than the variation granularity of the value of the vertical coordinate.

With reference to Table 3, the difference between two adjacent data in the first column of Table 3 is 2, the difference between two adjacent data in the second column of Table 3 is 4, the difference between two adjacent data in the third column of Table 3 is 6, and so on. That is, the second granularity is also variable, and the second granularity may vary in a linear form.

With further reference to Table 3, for example, for the first row in Table 3, the difference between the second data (36) and the first data (18) is 18, the difference between the third data (72) and the second data (36) is 36, the difference between the fourth data (144) and the third data (72) is 72, and so on. That is, the first granularity may be variable, and the first granularity may vary in an exponential form, such as the exponential form with base 2.

When adjusting the first parameter (or the maximum value of the first random number), coarse-grained adjustment may be performed first, and then fine-grained adjustment is performed. Corresponding to Table 3, it may be understood that, an appropriate column is first selected from Table 3, and then a final value is selected from the data in the column. Corresponding to FIG. 7, it may be understood that, an appropriate value is first selected from a certain curve, then a horizontal coordinate of the value is fixed (that is, the horizontal coordinate is selected first, and the horizontal coordinate varies exponentially with base 2), and then an appropriate value of the vertical coordinate is selected from the 8 curves (the vertical coordinate varies linearly).

For example, selection (or trial) is started from the first row of Table 3 first, that is, selection is performed from 18, 36, 72, 144, 288, 576, 1152, and 2304. Assuming that the finally selected appropriate value is 144, the final value may be further selected from the values in the 4th column. For example, the finally selected maximum value of the preset range is 208.

The manner of determining the maximum value of the first random number based on Table 4 is similar to the manner of determining the maximum value of the first random number based on Table 3. For example, the encoding manner of the first parameter corresponding to Table 4 may be the same as the encoding manner of the first parameter corresponding to Table 3. For brevity, details are not repeated herein.

Table 3

| First parameter *W* | 2^1 | 2^2 | 2^3 | 2^4 | 2^5 | 2^6 | 2^7 | 2^8 |
|---|---|---|---|---|---|---|---|---|
| 1 | 18 | 36 | 72 | 144 | 288 | 576 | 1152 | 2304 |
| 2 | 20 | 40 | 80 | 160 | 320 | 640 | 1280 | 2560 |
| 3 | 22 | 44 | 88 | 176 | 352 | 704 | 1408 | 2816 |
| 4 | 24 | 48 | 96 | 192 | 384 | 768 | 1536 | 3072 |
| 5 | 26 | 52 | 104 | 208 | 416 | 832 | 1664 | 3328 |
| 6 | 28 | 56 | 112 | 224 | 448 | 896 | 1792 | 3584 |
| 7 | 30 | 60 | 120 | 240 | 480 | 960 | 1920 | 3840 |
| 8 | 32 | 64 | 128 | 256 | 512 | 1024 | 2048 | 4096 |

Table 4

| First parameter w | 1 | 2 | 3 | 4 | 5 | 6 | 7 | 8 |
|---|---|---|---|---|---|---|---|---|
| 1 | 0.0275 % | 0.0549 % | 0.1099 % | 0.2197 % | 0.4395 % | 0.8789 % | 1.7578 % | 3.5156 % |
| 2 | 0.0305 % | 0.0610 % | 0.1221 % | 0.2441 % | 0.4883 % | 0.9766 % | 1.9531 % | 3.9063 % |
| 3 | 0.0336 % | 0.0671 % | 0.1343 % | 0.2686 % | 0.5371 % | 1.0742 % | 2.1484 % | 4.2969 % |

(continued)

| First parameter w | 1 | 2 | 3 | 4 | 5 | 6 | 7 | 8 |
|---|---|---|---|---|---|---|---|---|
| 4 | 0.0366 % | 0.0732 % | 0.1465 % | 0.2930 % | 0.5859 % | 1.1719 % | 2.3438 % | 4.6875 % |
| 5 | 0.0397 % | 0.0793 % | 0.1587 % | 0.3174 % | 0.6348 % | 1.2695 % | 2.5391 % | 5.0781 % |
| 6 | 0.0427 % | 0.0854 % | 0.1709 % | 0.3418 % | 0.6836 % | 1.3672 % | 2.7344 % | 5.4688 % |
| 7 | 0.0458 % | 0.0916 % | 0.1831 % | 0.3662 % | 0.7324 % | 1.4648 % | 2.9297 % | 5.8594 % |
| 8 | 0.0488 % | 0.0977 % | 0.1953 % | 0.3906 % | 0.7813 % | 1.5625 % | 3.1250 % | 6.2500 % |

It can be seen from the above illustration that, the first parameter may be used for determining the preset range. The manner of determining the preset range based on the first parameter is not specifically limited in the embodiments of the present disclosure. In some possible implementations, the first parameter may include the maximum value of the preset range and/or the minimum value of the preset range. For example, the second device may directly indicate the maximum value of the preset range and/or the minimum value of the preset range to the first device.

In some other possible implementations, the first parameter may be an index parameter in a preset table, where the index parameter may be used for determining the preset range from the preset table. For example, the second device may send the first parameter to the first device, and the first device searches the preset table based on the first parameter and determines the maximum value of the preset range and/or the minimum value of the preset range from the preset table. The preset table may be Table 3 or Table 4 in the above. The first parameter is determined through the preset table, which can reduce the bit length occupied by the first parameter in signaling, thereby reducing communication overhead.

In some embodiments, the index parameter may include a row index and/or a column index. The order of the row index and the column index is not specifically limited in the embodiments of the present disclosure. For example, the index parameter may be formed by a row index followed by a column index, or the index parameter may be a column index followed by a row index. For example, in a case where the value of the first parameter is 208 in Table 3, if the indication is performed in a row-first and column-second manner, and a row number occupies 3 bits and a column number also occupies 3 bits, the first parameter may be 101100. That is, the value of the first parameter is the value in row 101 (5) and column 100 (4). Certainly, the order of the row number and the column number may also be interchanged, and if the row number and the column number are interchanged, the value of the first parameter is 100101.

In some embodiments, if values on the horizontal axis and the vertical axis in the table are not powers of 2, such as 9, the first parameter may also be encoded in a linear encoding manner. The specific encoding manner may be a row-first and column-second manner, or a column-first and row-second manner. Taking 208 in Table 3 as an example, if encoding is performed in the row-first and column-second manner, the value of the first parameter is 28 (encoding starts from 0).

For ease of understanding, the solution of the present disclosure is described in detail below in conjunction with 2 embodiments. It may be noted that, the following embodiments are merely examples, and the solution of the embodiments of the present disclosure is not limited thereto.

Embodiment 1

Embodiment 1 describes the solution of the embodiments of the present disclosure by taking a case where the random number generated by the first device is an integer as an example. Both the first random number and the second random number hereinafter are integers.

A counter *RN-COUNTER* is arranged inside the first device, and the counter has an initial value used for indicating that the counter has been reset. The initial value may be outside the range of the random number generated by the first device, or the initial value may fall within the range of the random number generated by the first device with an extremely low probability. For example, if the maximum value of $Q$ specified in the protocol is $MQ$, the initial value may be $2^{MQ} - 1$.

The second device sends a first message, such as a query message, to the first device. The first message includes a parameter $Q$ and a parameter $W$. The parameter $Q$ is used for determining the range of the first random number, and the parameter $W$ is used for determining the preset range. For example, the parameter $W$ is used for determining the maximum value of the preset range, and the preset range may be $[0, W)$.

Upon receiving the first message, the first device may adopt different processing manners according to different values of the counter.

If the value of the counter is the initial value, the first device may generate the first random number $RN$, where the range of $RN$ is determined based on the exponential power of the parameter $Q$. For example, the range of $RN$ may be $[0, 2^Q-1]$. That is, the first device may generate the first random number $RN$ within $[0, 2^Q-1]$. After generating $RN$, the first device may assign $RN$ to the counter.

If the counter already has a valid count, for example, the value of the counter is not the initial value and *RN-COUNTER>w,* the first device may update the value of the counter. The updated value of the counter is equal to *RN-COUNTER-w.*

If the value of the counter *RN-COUNTER* is greater than or equal to 0 and less than *W,* the first device is able to initiate initial access. If the value of the counter *RN-COUNTER* is greater than or equal to W, the first device continues to monitor the first message sent by the second device.

After the first device initiates initial access, there are two scenarios, i.e., successful initial access and failed initial access. The two scenarios are described separately below.

If the initial access performed by the first device fails, the first device may readjust the value of the counter and resume monitoring the first message sent by the second device. All parameters in the solution described below are subject to the most recently received parameter.

In some embodiments, the first device may adjust the value of the counter to a value close to 2^*Q*-1. For example, the updated value of the counter is equal to 2^*Q*-1-*RN-COUNTER.*

In some embodiments, the first device may generate a second random number and assign the second random number to the counter. The generation range of the second random number may be determined based on a second parameter. The second parameter may be one or more of *S, T, Q,* or *W.* The parameter *S* and/or the parameter *T* may be obtained by the first device during initial access. For example, during initial access, the second device may send the parameter S and/or the parameter *T* to the first device. Different scenarios are described below.

In some possible implementations, if the first device obtains the parameter *S* during initial access and *S<Q,* the range of the second random number may be [2^*S*-1, *2^Q-1].* The first device may generate the second random number within [2^*S*-1, 2^*Q*-1].

In some possible implementations, if the first device obtains the parameter *T* during initial access and *T<Q,* the range of the second random number may be [0, 2^*T*-1] or [*W,* 2^*T*-1]. The first device may generate the second random number within [0, 2^*T*-1] or *[W,* 2^*T*-1].

In some possible implementations, if the first device obtains the parameter *S* and the parameter *T* during initial access and *S<T<Q,* the range of the second random number may be [2^*S*-1, 2^*T*-1]. The first device may generate the second random number within [2^*S*-1, 2^*T*-1].

If the initial access performed by the first device succeeds, the first device may set the value of the counter to the initial value, and stop monitoring the first message until the whole call process ends.

## Embodiment 2

Embodiment 2 describes the solution of the embodiments of the present disclosure by taking the random number generated by the first device being a non-integer as an example. Both the first random number and the second random number hereinafter are fractions.

A random percentage *rp* is arranged inside the first device, and the initial value of the random percentage is 1. The range of the first random number generated by the first device is [0,1). The random percentage is hereinafter referred to as an internal variable for short.

The second device sends a first message, such as a query message, to the first device. The first message includes a parameter w. The parameter *w* is used for determining the preset range. For example, the parameter w is used for determining the maximum value of the preset range, and the preset range may be [0, *w*).

Upon receiving the first message, the first device may adopt different processing manners according to different values of the internal variable.

If the value of the internal variable is 1, the first device may generate a first random number *rn.* The range of *rn* is [0,1), and the first device may generate the first random number *rn* within [0,1). After generating *rn,* the first device may assign the value of *rn* to the internal variable.

If the value of the internal variable is within [0,1) and the value of the internal variable is greater than *w*, the first device may update the value of the internal variable, where the updated value of the internal variable is equal to *rp-w.* Additionally, the first device may continue monitoring the first message sent by the second device.

If the value of the internal variable is within [0, w), the first device may initiate initial access.

After the first device initiates initial access, there are two scenarios, i.e., successful initial access and failed initial access. The two scenarios are described separately below.

If the initial access performed by the first device fails, the first device may readjust the value of the internal variable and resume monitoring the first message sent by the second device. All parameters in the solution described below are subject to the most recently received parameter.

In some embodiments, the first device may adjust the value of the internal variable to a value close to 1. For example, the adjusted value of the internal variable is equal to 1 - *rp.*

In some embodiments, the first device may generate the second random number and assign the second random

number to the counter. The generation range of the second random number may be determined based on a second parameter. The second parameter may be one or more of *s*, *t*, or *w* described below. The parameter *s* and/or the parameter *t* may be obtained by the first device during initial access. For example, during initial access, the second device may send the parameter *s* and/or the parameter *t* to the first device. Different scenarios are described below.

In some possible implementations, if the first device obtains the parameter s during initial access and $s<1$, the range of the second random number may be [*s*, 1). The first device may generate the second random number within [*s*, 1).

In some possible implementations, if the first device obtains the parameter *t* during initial access and $t<1$, the range of the second random number may be [0, *t*] or [*w*, *t*]. The first device may generate the second random number within [0, *t*] or [*w*, *t*].

In some possible implementations, if the first device obtains the parameter s and the parameter *t* during initial access and $s<t<1$, the range of the second random number may be [*s*, *t*]. The first device may generate the second random number within [*s*, *t*].

If the initial access performed by the first device succeeds, the first device may set the value of the internal variable to default value 1, and stop monitoring the first message until the whole call process ends.

The method embodiments of the present disclosure are described in detail above with reference to FIG. 1 to FIG. 7. The apparatus embodiments of the present disclosure are described in detail below with reference to FIG. 8 to FIG. 10. It may be understood that, the illustration of the method embodiments corresponds to the illustration of the apparatus embodiments. Therefore, for parts that are not described in detail, reference may be made to the foregoing method embodiments.

FIG. 8 is a schematic block diagram of a communication device provided in the embodiments of the present disclosure. The communication device 800 illustrated in FIG. 8 may be any one of the first devices described above. The communication device 800 includes a receiving unit 810.

The receiving unit 810 is configured to receive a first message sent by a second device, where the first message is used for triggering the first device having a first variable within a preset range to perform initial access, and the first variable is used for determining whether the first is able to initiate initial access.

In some possible implementations, the communication device further includes a generating unit and an updating unit. The generating unit is configured to generate a first random number in a case where a value of the first variable is an initial value and/or a state machine in the first device is in an initial state. The updating unit is configured to update a current value of the first variable to the first random number.

In some possible implementations, the receiving unit is further configured to receive a first parameter sent by the second device, where the first parameter is used for determining the preset range.

In some possible implementations, the communication device further includes the updating unit. The updating unit is configured to update the first variable using the first parameter in a case where the value of the first variable is not the initial value and/or the state machine in the first device is not in the initial state.

In some possible implementations, an updated value of the first variable is determined based on a difference between the current value of the first variable and the first parameter.

In some possible implementations, the communication device further includes the generating unit and the updating unit. The generating unit is configured to generate a second random number in a case where initial access performed by the communication device fails. The updating unit is configured to update a current value of the first variable to the second random number.

In some possible implementations, the receiving unit is further configured to receive the second parameter sent by the second device, where the second parameter is used for determining a range of the second random number.

In some possible implementations, the maximum value of the second random number and/or the minimum value of the second random number is determined based on the second parameter.

In some possible implementations, the communication device further includes a determining unit. The determining unit is configured to determine the value of the first variable based on a maximum value of the first random number in the case where initial access performed by the communication device fails.

In some possible implementations, the communication device further includes a setting unit. The setting unit is configured to set the value of the first variable to the initial value in a case where initial access performed by the communication device completes.

In some possible implementations, the first random number is an integer, or the first random number is a non-integer.

In some possible implementations, in a case where the first random number is a non-integer, the first random number is a non-integer greater than or equal to 0 and less than 1.

In some possible implementations, in a case where the first random number is an integer, the receiving unit is further configured to receive a third parameter sent by the second device. The third parameter is used for determining a range of the first random number.

In some possible implementations, the maximum value of the first random number is determined based on 2

raised to the power of the third parameter.

In some possible implementations, the third parameter is carried in the first message.

In some possible implementations, the value of the first parameter varies according to a first rule. The first rule includes the following: the first parameter varies first according to a first granularity and then varies according to a second granularity, where the first granularity is greater than the second granularity.

In some possible implementations, the first granularity varies in an exponential form, and/or the second granularity varies in a linear form.

In some possible implementations, the first granularity varies exponentially with base 2.

In some possible implementations, the first parameter includes a maximum value of the preset range and/or a minimum value of the preset range. Alternatively, the first parameter is an index parameter in a preset table, where the index parameter is used for determining the preset range from the preset table.

In some possible implementations, the first message is a query message or a select message.

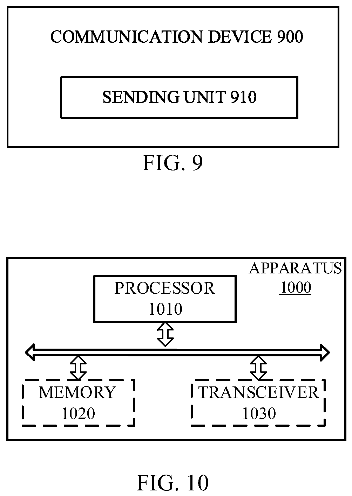

FIG. 9 is a schematic block diagram of another communication device provided in the embodiments of the present disclosure. The communication device 900 illustrated in FIG. 9 may be any one of the second devices described above. The communication device 900 includes a sending unit 910.

The sending unit 910 is configured to send a first message to a first device, where the first message is used for triggering the first device having a first variable within a preset range to perform initial access, and the first variable is used for determining whether the first device is able to initiate initial access.

In some possible implementations, in a case where a value of the first variable is an initial value and/or a state machine in the first device is in an initial state, the first variable is updated based on a first random number, and the first random number is generated by the first device.

In some possible implementations, the sending unit is further configured to send a first parameter to the first device, where the first parameter is used for determining a preset range.

In some possible implementations, in a case where the value of the first variable is not the initial value and/or the state machine in the first device is not in the initial state, the first variable is updated based on the first parameter.

In some possible implementations, an updated value of the first variable is determined based on a difference between a current value of the first variable and the first parameter.

In some possible implementations, in a case where initial access performed by the first device fails, the first variable is updated based on a second random number, and the second random number is generated by the first device.

In some possible implementations, the sending unit is further configured to send a second parameter to the first device, where the second parameter is used for determining a range of the second random number.

In some possible implementations, a maximum value of the second random number and/or a minimum value of the second random number is determined based on the second parameter.

In some possible implementations, in the case where initial access performed by the first device fails, the value of the first variable is determined based on a maximum value of the first random number.

In some possible implementations, in a case where initial access performed by the first device completes, the value of the first variable is the initial value.

In some possible implementations, the first random number is an integer, or the first random number is a non-integer.

In some possible implementations, in a case where the first random number is a non-integer, the first random number is a non-integer greater than or equal to 0 and less than 1.

In some possible implementations, in a case where the first random number is an integer, the sending unit is further configured to send a third parameter to the first device, and the third parameter is used for determining a range of the first random number.

In some possible implementations, the maximum value of the first random number is determined based on 2 raised to the power of the third parameter.

In some possible implementations, the third parameter is carried in the first message.

In some possible implementations, the value of the first parameter varies according to a first rule, where the first rule includes the following: the first parameter varies first according to a first granularity and then varies according to a second granularity, where the first granularity is greater than the second granularity.

In some possible implementations, the first granularity varies in an exponential form, and/or the second granularity varies in a linear form.

In some possible implementations, the first granularity varies exponentially with base 2.

In some possible implementations, the first parameter includes a maximum value of the preset range and/or a minimum value of the preset range. Alternatively, the first parameter is an index parameter in a preset table, and the index parameter is used for determining the preset range from the preset table.

In some possible implementations, the first message is a query message or a select message.

In an optional embodiment, the receiving unit 810 may be a transceiver 1030. The communication device 800

may further include a processor 1010 and a memory 1020, as illustrated in detail in FIG. 10.

In an optional embodiment, the sending unit 910 may be a transceiver 1030. The communication device 900 may further include a processor 1010 and a memory 1020, as illustrated in detail in FIG. 10.

FIG. 10 is a schematic structural diagram of a communication apparatus according to the embodiments of the present disclosure. Dotted lines in FIG. 10 indicate that the corresponding unit or module is optional. The apparatus 1000 may be used for implementing the methods described in the foregoing method embodiments. The apparatus 1000 may be a chip, a terminal device, or a network device.

The apparatus 1000 may include one or more processor 1010. The processor 1010 may support the apparatus 1000 to implement the method described in the method embodiments of the present disclosure. The processor 1010 may be a general-purpose processor or a special-purpose processor. For example, the processor may be a central processing unit (CPU), or may be another general-purpose processor, digital signal processor (DSP), application specific integrated circuit (ASIC), field programmable gate array (FPGA), or another programmable logic device, discrete gate or transistor logic device, or discrete hardware component. The general-purpose processor may be a microprocessor, or the processor may be any conventional processor or the like.

The apparatus 1000 may include one or more memory 1020. A program is stored in the memory 1020 which, when executed by the processor 1010, enables the processor 1010 to perform the methods described in the foregoing method embodiments. The memory 1020 may be independent of the processor 1010, or integrated into the processor 1010.

The apparatus 1000 may further include a transceiver 1030. The processor 1010 may communicate with another device or chip through the transceiver 1030. For example, the processor 1010 may transmit and receive data to and from another device or chip through the transceiver 1030.

The embodiments of the present disclosure further provide a computer-readable storage medium for storing a program. The computer-readable storage medium may be applied to a terminal device or a network device provided in the embodiments of the present disclosure, and the program enables a computer to perform the methods performed by the terminal device or the network device in each of the embodiments of the present disclosure.

The embodiments of the present disclosure further provide a computer program product. The computer program product includes a program. The computer program product may be applied to a terminal device or a network device provided in the embodiments of the present disclosure, and the program enables a computer to perform the methods performed by the terminal device or the network device in each of the embodiments of the present disclosure.

The embodiments of the present disclosure further provide a computer program. The computer program may be applied to a terminal device or a network device provided in the embodiments of the present disclosure, and the computer program enables a computer to perform the methods performed by the terminal device or the network device in each of the embodiments of the present disclosure.

It may be understood that, the terms "system" and "network" in the present disclosure may be used interchangeably. Additionally, the terms used in the present disclosure are only used for explaining specific embodiments of the present disclosure, and are not intended to limit the present disclosure. The terms such as "first", "second", "third" and "fourth" in the description, claims and figures of the present disclosure are for distinguishing different objects, rather than describing a specific sequence. In addition, the terms "include", "have" and any variations thereof are intended to cover non-exclusive inclusion.

In the embodiments of the present disclosure, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the embodiments of the present disclosure, "B corresponding to A" means that B is associated with A, and B can be determined according to A. However, it may also be understood that determining B according to A does not mean that B is determined only according to A, and B may also be determined according to A and/or other information.

In the embodiments of the disclosure, the term "correspondence" may mean that there is a direct or indirect correspondence between the two, may mean that there is an association between the two, or may mean a relationship of indicating and indicated or configuring and configured, etc.

In the embodiments of the present disclosure, "predefined" or "preconfigured" may be implemented by prestoring corresponding codes, tables, or other manners that may be used for indicating relevant information in a device (for example, a terminal device and a network device). The specific implementation thereof is not limited in the embodiments of the present disclosure. For example, predefined may mean defined in a protocol.

In the embodiments of the present disclosure, the "protocol" may refer to a standard protocol in the communication field. For example, the protocol may include an LTE protocol, an NR protocol, and related protocols applied to future communication systems, which is not limited in the present disclosure.

In the embodiments of the disclosure, the terms "system" and "network" herein are usually used interchangeably

throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

In various method embodiments of the disclosure, the magnitude of a sequence number of each of the foregoing processes does not mean an execution order, and an execution order of each process may be determined according to a function and an internal logic of the process, which shall not constitute any limitation to an implementation process of embodiments of the disclosure.

In several embodiments provided in the present disclosure, it may be understood that, the disclosed system, apparatus and method may be implemented in other manners. For example, the apparatus embodiments described above are merely exemplary. For example, the division of the units is only a logical function division, and there may be other division manners in actual implementation. For example, multiple units or components may be combined or integrated into another system, or some features may be omitted or not executed. In addition, the mutual coupling, direct coupling or communication connection illustrated or discussed may be indirect coupling or communication connection between apparatuses or units through some interfaces, and may be in electrical, mechanical or other forms.

The units described as separate components may or may not be physically separated, and the components illustrated as units may or may not be physical units. That is, the components may be in one place, or distributed to multiple network units. Part or all of the units may be selected according to actual needs to achieve the purpose of the solutions of the embodiments.

In addition, each functional unit in each embodiment of the present disclosure may be integrated into one processing unit, or each unit may exist alone physically, or two or more units may be integrated into one unit.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

**1.** A method for wireless communication, comprising:
receiving, by a first device, a first message sent by a second device, wherein the first message is used for triggering the first device having a first variable within a preset range to perform initial access, and the first variable is used for determining whether the first device is able to initiate initial access.

**2.** The method of claim 1, further comprising:

generating, by the first device, a first random number in a case where a value of the first variable is an initial value and/or a state machine in the first device is in an initial state; and
updating, by the first device, a current value of the first variable to the first random number.

**3.** The method of claim 1 or 2, further comprising:
receiving, by the first device, a first parameter sent by the second device, wherein the first parameter is used for determining the preset range.

**4.** The method of claim 3, further comprising:

updating, by the first device, the first variable using the first parameter in a case where a value of the first variable is not an initial value and/or a state machine in the first device is not in an initial state.

5. The method of claim 4, wherein an updated value of the first variable is determined based on a difference between a current value of the first variable and the first parameter.

6. The method of any one of claims 1 to 5, further comprising:

generating, by the first device, a second random number in a case where initial access performed by the first device fails; and
updating, by the first device, a current value of the first variable to the second random number.

7. The method of claim 6, further comprising:
receiving, by the first device, a second parameter sent by the second device, wherein the second parameter is used for determining a range of the second random number.

8. The method of claim 7, wherein a maximum value of the second random number and/or a minimum value of the second random number is determined based on the second parameter.

9. The method of any one of claims 1 to 5, further comprising:
determining, by the first device, a value of the first variable based on a maximum value of a first random number in a case where initial access performed by the first device fails.

10. The method of any one of claims 1 to 8, further comprising:
setting, by the first device, a value of the first variable to an initial value in a case where initial access performed by the first device completes.

11. The method of any one of claims 1 to 10, wherein a first random number is an integer or the first random number is a non-integer.

12. The method of claim 11, wherein the first random number is a non-integer greater than or equal to 0 and less than 1 in a case where the first random number is a non-integer.

13. The method of claim 11, wherein in a case where the first random number is an integer, the method further comprises:
receiving, by the first device, a third parameter sent by the second device, wherein the third parameter is used for determining a range of the first random number.

14. The method of claim 13, wherein a maximum value of the first random number is determined based on 2 raised to a power of the third parameter.

15. The method of claim 13 or 14, wherein the third parameter is carried in the first message.

16. The method of any one of claims 3 to 5, wherein a value of the first parameter varies according to a first rule, and the first rule comprises:
varying first according to a first granularity and then varying according to a second granularity, wherein the first granularity is greater than the second granularity.

17. The method of claim 16, wherein the first granularity varies in an exponential form and/or the second granularity varies in a linear form.

18. The method of claim 17, wherein the first granularity varies exponentially with base 2.

19. The method of any one of claims 3 to 5 and 16 to 18, wherein

the first parameter comprises a maximum value of the preset range and/or a minimum value of the preset range; or
the first parameter is an index parameter in a preset table, and the index parameter is used for determining the preset range from the preset table.

**20.** The method of any one of claims 1 to 19, wherein the first message is a query message or a select message.

**21.** A method for wireless communication, comprising:
sending, by a second device, a first message to a first device, wherein the first message is used for triggering the first device having a first variable within a preset range to perform initial access, and the first variable is used for determining whether the first device is able to initiate initial access.

**22.** The method of claim 21, wherein the first variable is updated based on a first random number in a case where a value of the first variable is an initial value and/or a state machine in the first device is in an initial state, and the first random number is generated by the first device.

**23.** The method of claim 21 or 22, further comprising:
sending, by the second device, a first parameter to the first device, wherein the first parameter is used for determining the preset range.

**24.** The method of claim 23, wherein the first variable is updated based on the first parameter in a case where a value of the first variable is not an initial value and/or a state machine in the first device is not in an initial state.

**25.** The method of claim 24, wherein an updated value of the first variable is determined based on a difference between a current value of the first variable and the first parameter.

**26.** The method of any one of claims 21 to 25, wherein the first variable is updated based on a second random number in a case where initial access performed by the first device fails, and the second random number is generated by the first device.

**27.** The method of claim 26, further comprising:
sending, by the second device, a second parameter to the first device, wherein the second parameter is used for determining a range of the second random number.

**28.** The method of claim 27, wherein a maximum value of the second random number and/or a minimum value of the second random number is determined based on the second parameter.

**29.** The method of any one of claims 21 to 25, wherein a value of the first variable is determined based on a maximum value of a first random number in a case where initial access performed by the first device fails.

**30.** The method of any one of claims 21 to 28, wherein a value of the first variable is an initial value in a case where initial access performed by the first device completes.

**31.** The method of any one of claims 21 to 30, wherein a first random number is an integer or the first random number is a non-integer.

**32.** The method of claim 31, wherein the first random number is a non-integer greater than or equal to 0 and less than 1 in a case where the first random number is a non-integer.

**33.** The method of claim 31, wherein in a case where the first random number is an integer, the method further comprises:
sending, by the second device, a third parameter to the first device, wherein the third parameter is used for determining a range of the first random number.

**34.** The method of claim 33, wherein a maximum value of the first random number is determined based on 2 raised to a power of the third parameter.

**35.** The method of claim 33 or 34, wherein the third parameter is carried in the first message.

**36.** The method of any one of claims 23 to 25, wherein a value of the first parameter varies according to a first rule, and the first rule comprises:
varying first according to a first granularity and then varying according to a second granularity, wherein the first granularity is greater than the second granularity.

**37.** The method of claim 36, wherein the first granularity varies in an exponential form and/or the second granularity varies in a linear form.

**38.** The method of claim 37, wherein the first granularity varies exponentially with base 2.

**39.** The method of any one of claims 23 to 25 and 36 to 38, wherein

the first parameter comprises a maximum value of the preset range and/or a minimum value of the preset range; or the first parameter is an index parameter in a preset table, and the index parameter is used for determining the preset range from the preset table.

**40.** The method of any one of claims 21 to 39, wherein the first message is a query message or a select message.

**41.** A communication device, the communication device being a first device and comprising: a receiving unit configured to receive a first message sent by a second device, wherein the first message is used for triggering the first device having a first variable within a preset range to perform initial access, and the first variable is used for determining whether the first device is able to initiate initial access.

**42.** The communication device of claim 41, further comprising:

a generating unit configured to generate a first random number in a case where a value of the first variable is an initial value and/or a state machine in the first device is in an initial state; and
an updating unit configured to update a current value of the first variable to the first random number.

**43.** The communication device of claim 41 or 42, wherein the receiving unit is further configured to: receive a first parameter sent by the second device, wherein the first parameter is used for determining the preset range.

**44.** The communication device of any one of claims 41 to 43, further comprising: an updating unit configured to update the first variable using a first parameter in a case where a value of the first variable is not an initial value and/or a state machine in the first device is not in an initial state.

**45.** The communication device of claim 44, wherein an updated value of the first variable is determined based on a difference between a current value of the first variable and the first parameter.

**46.** The communication device of any one of claims 41 to 45, further comprising:

a generating unit configured to generate a second random number in a case where initial access performed by the communication device fails; and
an updating unit configured to update a current value of the first variable to the second random number.

**47.** The communication device of claim 46, wherein the receiving unit is further configured to: receive a second parameter sent by the second device, and the second parameter is used for determining a range of the second random number.

**48.** The communication device of claim 47, wherein a maximum value of the second random number and/or a minimum value of the second random number is determined based on the second parameter.

**49.** The communication device of any one of claims 41 to 45, further comprising: a determining unit configured to determine a value of the first variable based on a maximum value of a first random number in a case where initial access performed by the communication device fails.

**50.** The communication device of any one of claims 41 to 49, further comprising: a setting unit configured to set a value of the first variable to an initial value in a case where initial access performed by the first device completes.

**51.** The communication device of any one of claims 41 to 50, wherein a first random number is an integer or the first random number is a non-integer.

52. The communication device of claim 51, wherein the first random number is a non-integer greater than or equal to 0 and less than 1 in a case where the first random number is a non-integer.

53. The communication device of claim 51, wherein in a case where the first random number is an integer, the receiving unit is further configured to:
receive a third parameter sent by the second device, wherein the third parameter is used for determining a range of the first random number.

54. The communication device of claim 53, wherein a maximum value of the first random number is determined based on 2 raised to a power of the third parameter.

55. The communication device of claim 53 or 54, wherein the third parameter is carried in the first message.

56. The communication device of any one of claims 43 to 45, wherein a value of the first parameter varies according to a first rule, and the first rule comprises:
varying first according to a first granularity and then varying according to a second granularity, wherein the first granularity is greater than the second granularity.

57. The communication device of claim 56, wherein the first granularity varies in an exponential form and/or the second granularity varies in a linear form.

58. The communication device of claim 57, wherein the first granularity varies exponentially with base 2.

59. The communication device of any one of claims 43 to 45 and 56 to 58, wherein

the first parameter comprises a maximum value of the preset range and/or a minimum value of the preset range; or
the first parameter is an index parameter in a preset table, and the index parameter is used for determining the preset range from the preset table.

60. The communication device of any one of claims 41 to 59, wherein the first message is a query message or a select message.

61. A communication device, the communication device being a second device and comprising:
a sending unit configured to send a first message to a first device, wherein the first message is used for triggering the first device having a first variable within a preset range to perform initial access, and the first variable is used for determining whether the first device is able to initiate initial access.

62. The communication device of claim 61, wherein the first variable is updated based on a first random number in a case where a value of the first variable is an initial value and/or a state machine in the first device is in an initial state, and the first random number is generated by the first device.

63. The communication device of claim 61 or 62, wherein the sending unit is further configured to:
send a first parameter to the first device, wherein the first parameter is used for determining the preset range.

64. The communication device of any one of claims 61 to 63, wherein the first variable is updated based on a first parameter in a case where a value of the first variable is not an initial value and/or a state machine in the first device is not in an initial state.

65. The communication device of claim 64, wherein an updated value of the first variable is determined based on a difference between a current value of the first variable and the first parameter.

66. The communication device of any one of claims 61 to 65, wherein the first variable is updated based on a second random number in a case where initial access performed by the first device fails, and the second random number is generated by the first device.

67. The communication device of claim 66, wherein the sending unit is further configured to:
send a second parameter to the first device, wherein the second parameter is used for determining a range of the second random number.

**68.** The communication device of claim 67, wherein a maximum value of the second random number and/or a minimum value of the second random number is determined based on the second parameter.

**69.** The communication device of any one of claims 61 to 65, wherein a value of the first variable is determined based on a maximum value of a first random number in a case where initial access performed by the first device fails.

**70.** The communication device of any one of claims 61 to 68, wherein a value of the first variable is an initial value in a case where initial access performed by the first device completes.

**71.** The communication device of any one of claims 61 to 70, wherein a first random number is an integer or the first random number is a non-integer.

**72.** The communication device of claim 71, wherein the first random number is a non-integer greater than or equal to 0 and less than 1 in a case where the first random number is a non-integer.

**73.** The communication device of claim 71, wherein in a case where the first random number is an integer, the sending unit is further configured to:
send a third parameter to the first device, wherein the third parameter is used for determining a range of the first random number.

**74.** The communication device of claim 73, wherein a maximum value of the first random number is determined based on 2 raised to a power of the third parameter.

**75.** The communication device of claim 73 or 74, wherein the third parameter is carried in the first message.

**76.** The communication device of any one of claims 63 to 65, wherein a value of the first parameter varies according to a first rule, and the first rule comprises:
varying first according to a first granularity and then varying according to a second granularity, wherein the first granularity is greater than the second granularity.

**77.** The communication device of claim 76, wherein the first granularity varies in an exponential form and/or the second granularity varies in a linear form.

**78.** The communication device of claim 77, wherein the first granularity varies exponentially with base 2.

**79.** The communication device of any one of claims 63 to 65 and 76 to 78, wherein

the first parameter comprises a maximum value of the preset range and/or a minimum value of the preset range; or
the first parameter is an index parameter in a preset table, and the index parameter is used for determining the preset range from the preset table.

**80.** The communication device of any one of claims 61 to 79, wherein the first message is a query message or a select message.

**81.** A communication device, comprising:

a transceiver;
a memory configured to store a program; and
a processor configured to invoke the program stored in the memory and control the transceiver to receive or send a signal, to cause the communication device to perform the method of any one of claims 1 to 40.

**82.** An apparatus, comprising a processor configured to invoke a program stored in a memory, to cause the apparatus to perform the method of any one of claims 1 to 40.

**83.** A chip, comprising a processor configured to invoke a program stored in a memory, to cause a device equipped with the chip to perform the method of any one of claims 1 to 40.

**84.** A computer-readable storage medium configured to store a program which is executable by a computer to perform the

method of any one of claims 1 to 40.

**85.** A computer program product comprising a program which is executable by a computer to perform the method of any one of claims 1 to 40.

**86.** A computer program being executable by a computer to perform the method of any one of claims 1 to 40.

100
110
120
120

FIG. 1

SENSOR MODULE 224
LOW-POWER COMPUTING MODULE 223
BACKSCATTER COMMUNICATI ON MODULE 222
ENERGY HAR VESTING MODULE 221
TERMINAL DEVICE 220
ENERGY SUPPLY/TRIGGER
BACKSCATTER COMMUNICATION
NETWORK DEVICE 210

FIG. 2

BASE STATION
A-IoT DEVICE
(a)
A-IoT DATA OR SIGNAL
Uu
BASE STATION
INTERMEDIATE NODE
A-IoT DEVICE
(b)
Uu
AUXILIARY NODE
BASE STATION
A-IoT DEVICE
(c)
TERMINAL DEVICE
A-IoT DEVICE
(d)

FIG. 3

MATCHING NETWORK
RF BAND-PASS FILTER
RF LOW NOISE AMPLIFIER
RF ENVELOPE DETECTOR
BASEBAND AMPLIFIER
BASEBAND LOW-PASS FILTER
1-BIT OR MULTI-BIT ANALOG-TO-DIGITAL CONVERTER
DIGITAL BASEBAND PROCESSING

FIG. 4

MATCHING NETWORK
RF BAND-PASS FILTER
RF LOW NOISE AMPLIFIER
MIXER
IF AMPLIFIER
IF BAND-PASS FILTER
IF ENVELOPE DETECTOR
BASEBAND AMPLIFIER
BASEBAND LOW-PASS FILTER
1-BIT OR MULTI-BIT ANALOG-TO-DIGITAL CONVERTER
DIGITAL BASEBAND PROCESSING

FIG. 5

FIRST DEVICE
SECOND DEVICE
S610 FIRST MESSAGE

FIG. 6

FIRST PARAMETER W
4500
4000
3500
3000
2500
2000
1500
1000
500
0
1
2
3
4
5
6
7
8

FIG. 7

COMMUNICATION DEVICE 800
RECEIVING UNIT 810

FIG. 8

COMMUNICATION DEVICE 900

SENDING UNIT 910

FIG. 9

APPARATUS
1000
PROCESSOR
1010
MEMORY
1020
TRANSCEIVER
1030

FIG. 10

**INTERNATIONAL SEARCH REPORT**

International application No.
**PCT/CN2023/134121**

**A. CLASSIFICATION OF SUBJECT MATTER**

H04W 28/02(2009.01)i

According to International Patent Classification (IPC) or to both national classification and IPC

**B. FIELDS SEARCHED**

Minimum documentation searched (classification system followed by classification symbols)

IPC:H04W; H04Q; H04B; H04L

Documentation searched other than minimum documentation to the extent that such documents are included in the fields searched

Electronic data base consulted during the international search (name of data base and, where practicable, search terms used)

CNTXT; ENTXT; WPABS; ENTXTC; WPABSC; CJFD; 3GPP; IEEE: 变量, 随机数, 值, 大; 小; 之间; 范围; 初始接入; 随机接入; 拥塞; 选择; 查询; variable, random, value, larger, less, between; range, initial access, random access, query, select+, congest

**C. DOCUMENTS CONSIDERED TO BE RELEVANT**

| Category* | Citation of document, with indication, where appropriate, of the relevant passages | Relevant to claim No. |
|---|---|---|
| X | WO 2023196298 A1 (INTERDIGITAL PATENT HOLDINGS, INC.) 12 October 2023 (2023-10-12)<br>description, paragraphs [0038]-[0186] and [0255]-[0260] | 1, 3, 21, 23, 41, 43, 61, 63, 81-86 |
| A | WO 2020220320 A1 (GUANGDONG OPPO MOBILE TELECOMMUNICATIONS CORP., LTD.) 05 November 2020 (2020-11-05)<br>entire description | 1-86 |
| A | US 2019104551 A1 (IDAC HOLDINGS, INC.) 04 April 2019 (2019-04-04)<br>entire description | 1-86 |
| A | WO 2023142569 A1 (HUAWEI TECHNOLOGIES CO., LTD.) 03 August 2023 (2023-08-03)<br>entire description | 1-86 |
| A | WO 2023212169 A1 (INTERDIGITAL PATENT HOLDINGS, INC.) 02 November 2023 (2023-11-02)<br>entire description | 1-86 |

☐ Further documents are listed in the continuation of Box C.    ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 August 2024** | **23 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/134121**

| Patent document cited in search report | Publication date (day/month/year) | Patent family member(s) | Publication date (day/month/year) |
|---|---|---|---|
| WO 2023196298 A1 | 12 October 2023 | None | |
| WO 2020220320 A1 | 05 November 2020 | None | |
| US 2019104551 A1 | 04 April 2019 | EP 3793124 A1 | 17 March 2021 |
| | | US 2023089690 A1 | 23 March 2023 |
| | | US 11856614 B2 | 26 December 2023 |
| | | US 2020214049 A1 | 02 July 2020 |
| | | US 11284445 B2 | 22 March 2022 |
| | | EP 3437418 A1 | 06 February 2019 |
| | | TW 201735695 A | 01 October 2017 |
| | | TWI 765881 B | 01 June 2022 |
| | | WO 2017173051 A1 | 05 October 2017 |
| | | US 2024188139 A1 | 06 June 2024 |
| WO 2023142569 A1 | 03 August 2023 | CN 116567677 A | 08 August 2023 |
| WO 2023212169 A1 | 02 November 2023 | None | |

Form PCT/ISA/210 (patent family annex) (July 2022)